(19) Europäisches Patentamt
European Patent Office
Office européen des brevets

(11) **EP 1 334 953 B1**

(12) **EUROPÄISCHE PATENTSCHRIFT**

(45) Veröffentlichungstag und Bekanntmachung des Hinweises auf die Patenterteilung:
**04.04.2007 Patentblatt 2007/14**

(51) Int Cl.:
*C03B 33/033* (2006.01)     *C03B 33/023* (2006.01)
*C03B 33/037* (2006.01)     *G01N 3/20* (2006.01)

(21) Anmeldenummer: **02026809.0**

(22) Anmeldetag: **28.11.2002**

(54) **Verfahren zum Brechen von Glasplatten**

Method for severing sheets of glass

Procédé pour rompre des feuilles de verre

(84) Benannte Vertragsstaaten:
**AT BE BG CH CY CZ DE DK EE ES FI FR GB GR IE IT LI LU MC NL PT SE SK TR**

(30) Priorität: **08.02.2002 DE 10205320**

(43) Veröffentlichungstag der Anmeldung:
**13.08.2003 Patentblatt 2003/33**

(73) Patentinhaber: **HEGLA Fahrzeug- u. Maschinenbau GmbH & Co. KG D-37688 Beverungen (DE)**

(72) Erfinder: **Glaser, Siegfried 37688 Beverungen (DE)**

(74) Vertreter: **Patentanwälte Dr. Solf & Zapf Candidplatz 15 81543 München (DE)**

(56) Entgegenhaltungen:
**EP-A- 0 402 342     EP-A- 0 587 542
WO-A-01/98368     AT-B- 399 144
US-A- 1 920 641     US-A- 5 165 585**

- **H. SCHOLZE: "Glas" 1988, SPRINGER-VERLAG , BERLIN , XP002279374 * Seite 243, Absatz 3.5.2.3 - Seite 248 ***
- **S.J.SCHNEIDER: "Ceramics and Glasses" 2000, ASM INTERNATIONAL , MATERIALS PARK, OHIO , XP002279375 * Seite 635 - Seite 644 ***
- **PATENT ABSTRACTS OF JAPAN Bd. 2000, Nr. 09, 13. Oktober 2000 (2000-10-13) -& JP 2000 154032 A (HOYA CORP), 6. Juni 2000 (2000-06-06)**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zum Brechen von Glasplatten nach dem Oberbegriff des Anspruchs 1.

Zum Aufteilen von Glasplatten bzw. Glasrohtafeln ist es bekannt, diese oberseitig anzuritzen und anschließend unterseitig mit einer Brechleiste anzuheben, so dass im Bereich der Ritzlinie ein Biegemoment auf die Glasplatte aufgebracht wird, welches durch stetiges Anheben irgendwann so groß wird, dass die Scheibe im Bereich der Ritzlinie durchbricht. Um das Biegeverhalten der zu brechenden Glasplatte zu beeinflussen, ist es bekannt, entlang der Ritzlinie, beidseitig der Ritzlinie die Scheibe mit Saugnäpfen anzusaugen oder mit Niederhaltern definiert niederzudrücken. Dabei können die Saugnäpfe oder die Niederhalter die Anhebebewegung durch die Brechleiste über einen bestimmten Weg mitmachen, bis sie in Endanschläge geraten, so dass die Kräfte, die auf die Scheibe wirken, schlagartig erhöht werden.

Bei in herkömmlicher Weise gebrochenem Glas verläuft die Bruchkante unregelmäßig. So ist z.B. die Bruchkante in Längsrichtung nicht gerade, sondern mehr oder weniger wellig. In Querrichtung bzw. in Dickenrichtung verläuft die Bruchkante nicht wie erwünscht senkrecht zur Glasoberfläche sondern schiefwinklig. Zudem entstehen sogenannte Nebenrisse, welche mehr oder weniger parallel zur Hauptbruchkante verlaufen, woraus z.B. insbesondere muscheliger oder schuppiger Bruch resultiert. Außerdem könnten Mikrorisse entstehen, die quer zum Hauptbruch in das Glas hinein laufen; diese führen bei der Weiterverarbeitung einer gebrochenen Glasscheibe zum Bruch. Insbesondere bei wechselnden thermischen Belastungen, wie im Einbau von Glasscheiben in Wintergärten, verursachen derartige Kanten Probleme. Aber auch bei Glas für den Möbelbau, Glas für Kraftfahrzeuge oder Glas im Bau- bzw. Innenausbausektor führt diese Ausbildung der Kanten dazu, dass die Kanten nach dem Brechen abgeschliffen werden müssen. Hierfür müssen die Glastafeln von vornherein mit einem Übermaß hergestellt werden und werden anschließend sehr aufwendig auf Endmaß abgeschliffen.

Aufgabe der Erfindung ist es, ein Verfahren zum Brechen von Glasplatten zu schaffen, welches eine saubere, fehlerfreie Kante ergibt.

Die Aufgabe wird mit einem Verfahren mit den Merkmalen des Anspruch 1 gelöst. Vorteilhafte Weiterbildungen sind in Unteransprüchen gekennzeichnet.

Das erfindungsgemäße Verfahren sieht vor, den Effekt der sogenannten langsamen Rissausbildung beim Brechen von Glas auszunutzen. Diese langsame Rissausbreitung kann am Grund einer Anritzspur im Glas stattfinden. Erfindungsgemäß wurde herausgefunden, dass eine langsame Rissausbreitung ab einem bestimmten Lastniveau dann kontrolliert stattfinden kann, wenn zumindest nach dem Erreichen dieses Lastniveaus abhängig von der Glasdicke eine bestimmte Steigerung des Lasteintrages eingehalten wird. Die sich dann ergebende, kontrollierte langsame Rissausbreitung führt zu einem Riss bzw. einem Bruch der sehr glatte und ebene Bruchkanten mit einem senkrechten Verlauf zur Glastafelebene aufweist.

Die erforderliche Bruchlast wird beispielsweise durch das Wölben der Glasplatte aufgebracht. Um die Last zu messen bzw. zu regeln, kann sowohl die durch die Wölbungsmittel eingeleitete Kraft direkt gemessen oder geregelt werden, oder indirekt über die Höhe bzw. Stärke der Wölbung bestimmt werden.

Zweckmäßigerweise wird zur Ermittlung der für die langsame Rissausbreitung notwendigen Lasthöhe zunächst die Bruchlast $F_{krit.}$ und/oder bei eingestellter Wölbung bzw. Verformungsgeschwindigkeit die Zeit bis zum Bruch $T_{krit.}$ und/oder die für den Bruch notwendige Stärke der Wölbung bzw. Verformung, das heißt der Weg bis zum Bruch $S_{krit.}$ bestimmt. Anschließend wird das Lastniveau festgelegt, das mindestens notwendig ist für eine langsame Rissausbreitung. Dieser Schwellenwert $T_s$, $F_s$ oder $S_s$ liegt bei ca. 70 bis 80% der Bruchlast. Anschließend wird eine Laststeigerungsrate eingestellt, die noch so niedrig ist, dass die langsame Rissausbreitung stattfindet. An den jeweiligen Bruchbildern kann dann sehr einfach ermittelt werden, ob noch eine langsame Rissausbreitung stattgefunden hat, da dann glatte Bruchkanten vorliegen.

Die Laststeigerungsrate ist dabei von der Glasdicke abhängig. Nach der Erfindung findet das Brechen des Glases somit bei linearer Lasterhöhung über die Zeit so langsam statt, dass die langsame Rissausbreitung gewährleistet ist. Um das Brechen zu beschleunigen, kann erfindungsgemäß bis zum Erreichen der Lastschwelle die Laststeigerung relativ schnell erfolgen, insbesondere in einer im Stand der Technik üblichen Geschwindigkeit und erst nach dem für eine langsame Rissausbreitung notwendigen Schwellenwert bzw. einem entsprechenden Schwellenbereich die Laststeigerungsrate zur Ausbildung einer langsamen Rissausbreitung gesenkt werden. Um die Laststeigerungsrate an die sich durch die Vertiefung des Risses effektiv verringernde Glasdicke anzupassen, kann die Laststeigerungsrate auch kontinuierlich verringert oder erhöht werden.

Erfindungsgemäß können ferner alle äußeren Einflüsse, die das Brechen des Glases beeinflussen, ermittelt werden und hieraus Steuerdaten für eine Maschinensteuerung derart erzeugt werden, dass beispielsweise für alle möglichen Glassorten und Glasdicken ein optimaler Schwellenwert der langsamen Rissausbildung und/oder eine optimale Laststeigerungsrate ermittelt und als Steuerdaten abgelegt werden.

Eine für das erfindungsgemäße Verfahren verwendbare Vorrichtung besitzt eine oder mehrere Brechleisten und/oder Sauger o.ä., die insbesondere elektromotorisch weg- oder kraftgesteuert angehoben werden, so dass jederzeit die in die Glasplatte eingetragene Kraft bekannt und kontrollierbar ist. Um das Biegemoment, welches im Bereich der Ritzlinie eingebracht wird, zu definieren und zu kontrollieren, können Niederhalter und/oder Sauger verwendet werden, welche beidseitig neben der Ritzlinie auf das Glas einwirken.

Bei dem erfindungsgemäßen Verfahren ist von Vorteil, dass durch das Herbeiführen einer langsamen Rissausbreitung bis zum Bruch ein absolut gleichmäßiger Riss- bzw. Bruchverlauf erzielt wird, der eine derart saubere Kante hinterlässt, dass diese Kanten nicht nachbearbeitet werden müssen. Hierbei ist von Vorteil, dass die Glasplatten nicht mit Übermaß hergestellt werden müssen, da die entstehende Bruchkante auch höchsten Ansprüchen bezüglich der Welligkeit, Muscheligkeit etc. genügt und ohne weitere Nachbearbeitung auch im Sichtbereich verarbeitbar ist.

Die Erfindung wird beispielhaft anhand einer Zeichnung erläutert. Es zeigen dabei:

Fig. 1      schematisch eine für das erfindungsgemäße Verfahren verwendbare Vorrichtung mit einer auf einem Bearbeitungstisch aufliegenden zu brechenden Glasplatte,

Fig. 2      eine Vorrichtung nach Fig. 1, wobei die Glasplatte mit einer Brechleiste aufgewölbt ist und Niederhalter beidseitig der Brechleiste auf dem Glas aufsitzen,

Fig. 3      eine Vorrichtung nach Fig. 1, wobei die Glasplatte weiter aufgewölbt ist als in Fig. 2 und die Niederhalter durch die Wölbung sich in den Endanschlägen befinden,

Fig. 4      schematisch eine Vorrichtung nach Fig. 1 in einem teilgeschnittenen Querschnitt im Bereich der Brechleiste,

Fig. 5      schematisch eine Vorrichtung nach Fig. 2 in einem Querschnitt entprechend Fig. 4, wobei die Brechleiste über die Breite der Glastafel gleichmäßig angehoben ist,

Fig. 6      schematisch eine Vorrichtung nach Fig. 3 in einem Querschnitt entsprechend Fig. 4,

Fig. 7      schematisch eine Vorrichtung nach Fig. 1 in einem teilgeschnittenen Querschnitt im Bereich der Brechleiste,

Fig. 8      eine Vorrichtung nach Fig. 7, wobei die Brechleiste bezogen auf die Breite der Glastafel nur auf einer Seite angehoben ist,

Fig. 9      eine Vorrichtung nach Fig. 7, wobei die Brechleiste auf beiden Seiten eine gleichmäßige Hubhöhe erzielt hat,

Fig. 10      eine weitere Ausführungsform einer für das erfindungsgemäße Verfahren verwendbaren Vorrichtung in Ausgangsposition, wobei zur Beeinflussung des Biegemoments Sauger vorhanden sind, die unterseitig an einer Glasplatte eingreifen können,

Fig. 11      eine Vorrichtung nach Fig. 10, wobei die Sauger die Glasplatte ansaugen,

Fig. 12      eine Vorrichtung nach Fig. 10, wobei eine Brechleiste die Glasplatte aufgewölbt und die Sauger mit angehoben hat,

Fig. 13      eine Vorrichtung nach Fig. 12, wobei die Glasplatte weiter aufgewölbt ist und die Sauger bis in die Anschläge angehoben sind,

Fig. 14      eine weitere Ausführungsform einer für das erfindungsgemäße Verfahren verwendbaren Vorrichtung mit alternativ oder gemeinsam einsetzbaren Niederhaltern und Saugern in einer Ausgangsposition,

Fig. 15      eine Vorrichtung nach Fig. 14, wobei eine Brechleiste die Glasplatte aufgewölbt hat,

Fig. 16      eine Vorrichtung nach Fig. 15, wobei die Glasplatte weiter aufgewölbt ist und die Niederhalter bis in deren Endanschlägen angehoben sind,

Fig. 17      bis 20 eine weitere Ausführungsform der für das erfindungsgemäße Verfahren verwendbaren Vorrichtung, wobei die Glasplatte mit beidseitig neben einer Ritzlinie angeordneten Saugern aufgewölbt wird, in verschiedenen Verfahrensstadien,

Fig. 21 bis 24      eine weitere Ausführungsform der für das erfindungsgemäße Verfahren verwendbaren Vorrichtung, wobei die Glasplatte mit einem oder mehreren entlang der Ritzlinie angeordneten Saugern aufgewölbt wird, in verschiedenen Verfahrensstadien,

Fig. 25a bis 25h — verschiedene, teils erfindungsgemäße, Laststeigerungsraten zum Erzielen eines Bruchs durch langsame Rissausbildung,

Fig. 25i bis 25p — weitere erfindungsgemäße, grob schematisch und nicht quantitativ dargestellte, Laststeigerungsraten, wobei eine Haltephase mit konstanter Last vorgesehen ist.

Um eine Glasplatte oder Glastafel 1 zu brechen, wird die Glasplatte oder Glastafel zunächst in herkömmlicher Weise im Bereich der gewünschten Trennlinie mit einem Schneidrädchen oder anderen geeigneten Mitteln angeritzt und hierdurch eine Ritzlinie entlang der gewünschten Trennungslinie erzeugt. Anschließend wird die Glasplatte oder Glastafel in eine Brechvorrichtung verfahren. Um einen Bruch der Glasplatte oder Glastafel herbeizuführen, wird die Glasplatte oder Glastafel im Bereich der Ritzlinie - insbesondere zur Ritzlinie hin - aufgewölbt, oder durch Abklappen eines Tischbereichs oder andere geeignete Mittel oder Methoden der Bruch herbeigeführt.

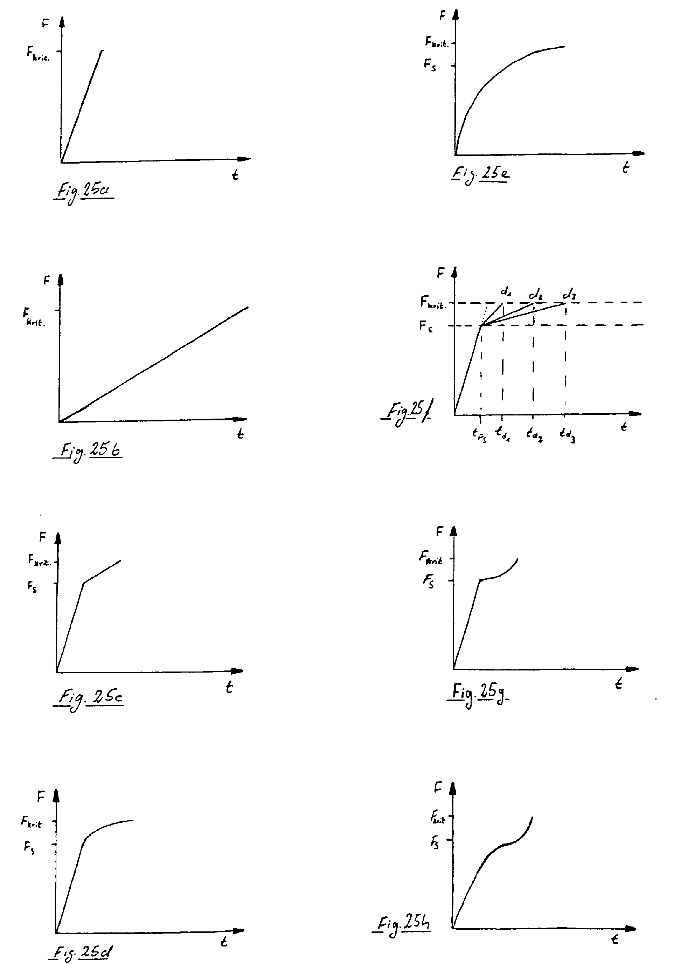

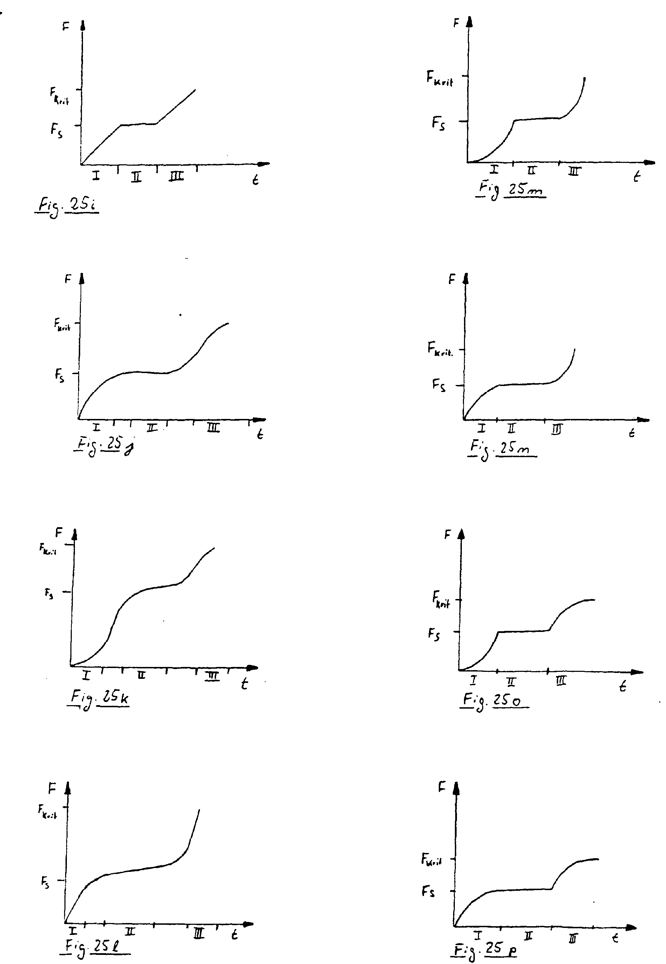

Um die Bruchlast $F_{krit.}$ zu bestimmen, bei der eine bestimmte Glasplatte einer vorgegebenen Dicke entlang der zuvor mit einem bestimmten Schneidrädchen aufgebrachten Ritzlinie bricht, wird die Glasplatte mit einer Last (Kraft) und einer bestimmten Laststeigerungsrate beaufschlagt (Fig. 25a). Die Laststeigerungsrate, das heißt die Zunahme der Last pro Zeit entspricht dabei beispielsweise den im Stand der Technik üblichen Laststeigerungsraten, die sehr hoch sind. Eine langsame Rissausbreitung ist bei diesen hohen Laststeigerungsraten nicht möglich. Erfindungsgemäß wurde erkannt, dass der sich durch eine kontrollierte, kontinuierlich stattfindende langsame Rissausbreitung ergebende Bruch, saubere, gerade und senkrecht zur Glasoberfläche verlaufende Bruchkanten ergibt.

Erfindungsgemäß wurde ferner herausgefunden, dass für eine kontrollierte und technisch nutzbare langsame Rissausbreitung ein Mindestlastniveau bzw. eine Lastschwelle $F_s$ notwendig ist. Zumindest oberhalb dieser Lastschwelle $F_s$ wird eine Laststeigerungsrate eingestellt, bei der abhängig unter anderem von der Dikke des Glases eine kontrollierte, kontinuierliche, langsame Rissausbreitung stattfindet. Üblicherweise sind mit zunehmender Glasdicke geringere Laststeigerungsraten notwendig (Fig. 25f). Die Lastschwelle $F_s$ liegt erfindungsgemäß üblicherweise bei etwa 70 bis 80% der Bruchlast $F_{krit.}$ Sie ist - wie die geeignete Laststeigerungsrate - vorzugsweise für jede Glassorte und - dicke empirisch zu bestimmen und kann von dem angegebenen Wert auch abweichen. Um den Brechvorgang in vorteilhafter Weise zu beschleunigen, kann die Laststeigerungsrate bis zum Erreichen der Lastschwelle $F_s$ sehr hoch gewählt werden und erst nach dem Erreichen der Lastschwelle $F_s$ den Verlauf der für die langsame Rissausbildung günstigen Laststeigerungsrate annehmen (Fig. 25c). Erfindungsgemäß wurde gefunden, dass der Bereich vor dem Erreichen der Lastschwelle $F_s$ bezüglich der Laststeigerungsrate im wesentlichen unkritisch ist, so dass auch durch eine sehr hohe Laststeigerungsrate in diesem Bereich Zeit gespart werden kann. Die Übergänge der unterschiedlichen Laststeigerungsraten müssen hierbei nicht abrupt sein, vielmehr können sie fließend übergehen (Fig. 25d, 25e).

Insbesondere kann die Laststeigerungsrate oberhalb der Lastschwelle $F_s$ derart verlaufen, dass sie an den Rissfortschritt angepasst ist. Durch den Rissfortschritt unterhalb der Ritzlinie wird die effektive Glasdicke, das heißt die Glasdicke zwischen dem Rissgrund und der der Ritzlinie gegenüberliegenden Glasoberfläche immer geringer. Da ein Zusammenhang zwischen der für die Ausbildung der langsamen Rissausbreitung günstigen Laststeigerungsrate und der Glasdicke besteht, kann die Laststeigerungsrate an die effektive Glasdicke angepasst werden. Die Laststeigerungsrate kann dabei über die Zeit verringert werden (Fig. 25d) oder erhöht werden (Fig. 25g), was insbesondere empirisch ermittelt wird. Auch hierbei können die Laststeigerungsraten fließend ineinander übergehen (Fig. 25h).

Erfindungsgemäß wird vorteilhafterweise eine Schneidflüssigkeit auf Wasserbasis verwendet, also insbesondere wässrige Emulsionen oder Suspensionen. Mit derartigen Schneidflüssigkeiten ist die langsame Rissausbreitung besonders gut ausgebildet und gut kontrollierbar, wobei der Bereich zwischen erforderlicher Lastschwelle $F_s$ und der Bruchlast $F_{krit.}$ einerseits und der Bereich der günstigen Laststeigerungsraten andererseits relativ groß ist.

Einen Einfluss auf die Art der Rissausbreitung und damit auf die günstigen Laststeigerungsraten haben insbesondere:

- Glasdicke
- Glasart
- Schneidrädchenart

  - Schneidrädchenwinkel
  - Schneidrädchendurchmesser
  - Schneidrädchenschliff (glatt oder rauh)

- Schneidrädchenabnutzung
- Schneidflüssigkeit
- Schneiddruck
- Schneidgeschwindigkeit
- Massenverteilung links und rechts vom Schnitt.
- Art und Weise des Lasteintragens (Wölben, Abkanten, etc.)

Diese Parameter werden vorzugsweise bei der empirischen Ermittlung der Lastschwelle $F_s$ und/oder der Laststeigerungsrate berücksichtigt.

Die empirisch für die oben genannten und gegebenenfalls weitere Parameter ermittelten Einflussgrößen auf die Zielgrößen-Lastschwelle $F_s$ und Laststeigerungsrate lassen sich insbesondere als Daten für eine Maschinensteuerung ablegen. Die Parameter können für den Betrieb einer nach dem erfindungsgemäßen Verfahren arbeitenden Vorrichtung manuell oder automatisiert erfasst werden und die Vorrichtung entsprechend gesteuert werden. Gegebenenfalls kann nach der Begutachtung eines Bruchbildes eine Nachregelung erfolgen. Ein typisches Bruchbild zeigt einen Bereich, der durch das Anritzen entstanden ist, einen sauberen glatten Bereich und - sofern eine erfindungsgemäße langsame Rissausbreitung nicht stattgefunden hat - gegebenenfalls noch einen Bereich, der einen energiereichen, unsauberen Bruch zeigt.

Um eine günstige Lastschwelle $F_s$ zu ermitteln, wird, wie bereits ausgeführt, die Bruchlast $F_{krit.}$ ermittelt. Anschließend wird die Last bis zur Lastschwelle $F_s$ mit einer relativ hohen - insbesondere im Stand der Technik üblichen - Laststeigerungsrate erhöht. Die Lastschwelle $F_s$ wird dabei zunächst in dem Bereich zwischen 70 und 80% der Bruchlast $F_{krit.}$ gelegt, da sich bei einer solchen Lasthöhe üblicherweise gute Ergebnisse zeigen. In einem nachfolgenden Versuch wird nach dem Erreichen dieser festgelegten Lastschwelle $F_s$ die Last mit einer Laststeigerungsrate erhöht, die - erfahrungsgemäß - relativ niedrig, jedoch deutlich niedriger als die Laststeigerungsrate bis zum Erreichen der Lastschwelle $F_s$ ist.

Die Laststeigerungsrate wird hierbei insbesondere über die Zeit festgelegt, die zwischen dem Erreichen der Lastschwelle $F_s$ und dem Bruch (Erreichen der Bruchlast $F_{krit.}$) liegt (Fig. 25f).

Für die Festlegung einer Ausgangslaststeigerungsrate wird die Zeit nach der Formel

$$T_d = T_{Fs} \left( 1 + \alpha \frac{d}{d_0} \right)$$

berechnet, wobei $T_d$ die Zeit vom Erreichen der Lastschwelle $F_s$ bis zum Bruch, d die Glasdicke, $d_0$ eine Referenzglasdicke, $T_{Fs}$ die Zeit bis zum Erreichen der Lastschwelle $F_s$ und $\alpha$ ein Erschwernisfaktor, der durch die oben genannten Parameter bestimmt wird, sind. Die Referenzglasdicke beträgt üblicherweise zwischen 1 und 4 mm.

Nach dem in der festgelegten Zeit herbeigeführten Bruch werden die Bruchkanten analysiert. Zeigen die Bruchkanten die gewünschte optimierte Bruchkante, ist eine Korrektur nicht nötig. Sind - insbesondere im letzten Abschnitt des Bruchs - Anzeichen eines energiereichen muscheligen Bruchs zu erkennen, kann die Lastschwelle $F_s$ verändert werden, insbesondere abgesenkt werden und/oder die Zeit $T_d$ verlängert werden, was einer Absenkung der Laststeigerungsrate entspricht.

Zeigt der Bruch einen optimalen Verlauf, kann zur Beschleunigung des gesamten Brechvorganges die Laststeigerungsrate und/oder die Lastschwelle $F_s$ erhöht werden, bis der Bruch wieder muschelige, nicht optimierte Bereiche zeigt. Hierdurch kann der Bereich eingegrenzt bzw. abgegrenzt werden, indem eine langsame Rissausbreitung sicher erzielbar ist.

Es hat sich herausgestellt, dass es vorteilhaft sein kann, die Laststeigerung während des Lasteintrages und oberhalb der Lastschwelle $F_s$ für eine kurze Zeit auszusetzen, das heißt die von außen aufgebrachte Last für eine bestimmte Zeit konstant zu halten. Eine derartige Haltephase (Fig. 25i bis 25p) ist vorteilhaft, wenn eine Homogenisierung der im Glas aufgrund des Lasteintrages herrschenden Spannung vorgenommen werden soll. Die Laststeigerung bis zum Bruch erfolgt hierbei somit in drei Phasen; einer Laststeigerungsphase 1 zumindest bis zum Erreichen der Lastschwelle $F_s$ oder darüber, einer Lasthaltephase II und anschließend einer Laststeigerungsphase III bis zum Bruch (Fig. 25i bis 25p, lediglich grob schematisch und nicht quantitative Darstellung).

Im Bereich I kann bis zum Erreichen der Lastschwelle $F_s$ die Laststeigerungsrate hoch bis sehr hoch sein. Die hierdurch eingetragenen Spannungen können während der Lasthaltephase unter Initiierung und Fortführung der langsamen Rissausbreitung bei Homogenisierung der Spannung insbesondere über die Risslänge abgebaut werden. In der Laststeigerungsphase III wird eine Laststeigerungsrate gewählt, die die weitere langsame Rissausbreitung gewährleistet. In den drei Phasen I, II, III können die Laststeigerungsraten linear (Fig. 25i) oder nicht linear (Fig. 25j bis 25p) verlaufen, wobei abrupte (Fig. 25i) und fließende Übergänge (Fig. 25j bis 25l) möglich sind.

In besonderen Fällen, beispielsweise bei besonders hartem oder dicken Glas kann zur Rissinitialisierung zunächst auch ein hoher Lasteintrag vorgenommen werden, der über der Lastschwelle $F_s$ liegt und während der Phase II eine nachfolgende Entlastung (Entspannungsphase II) vorgesehen sein.

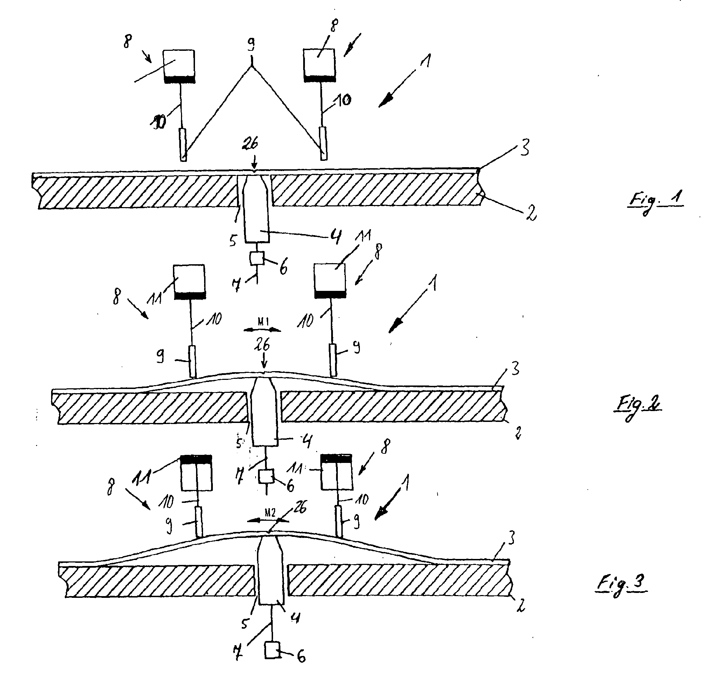

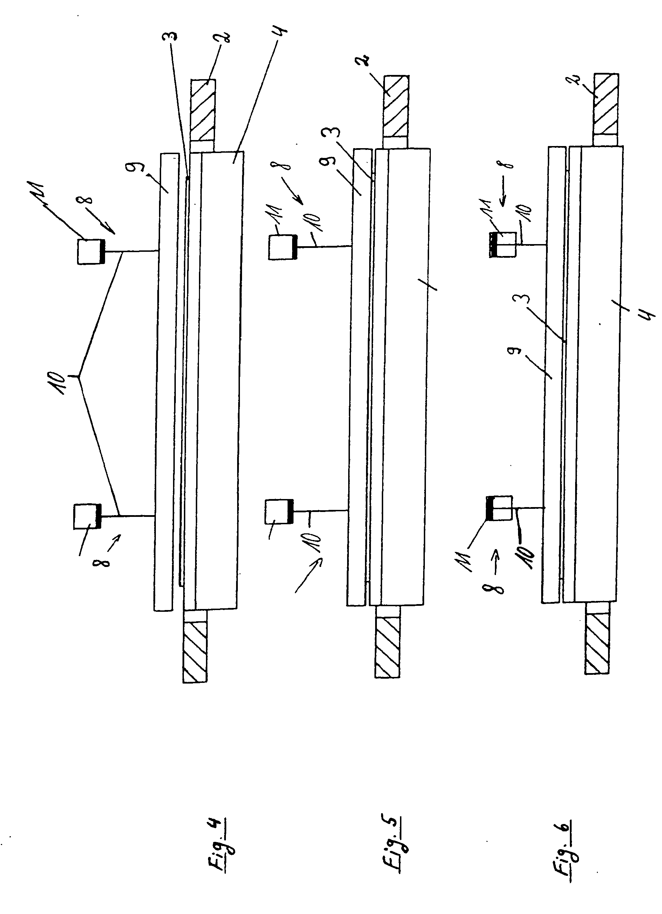

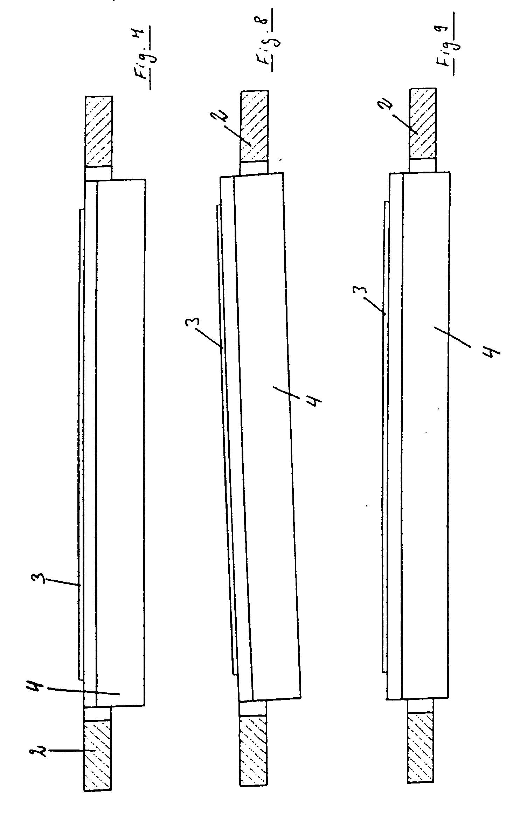

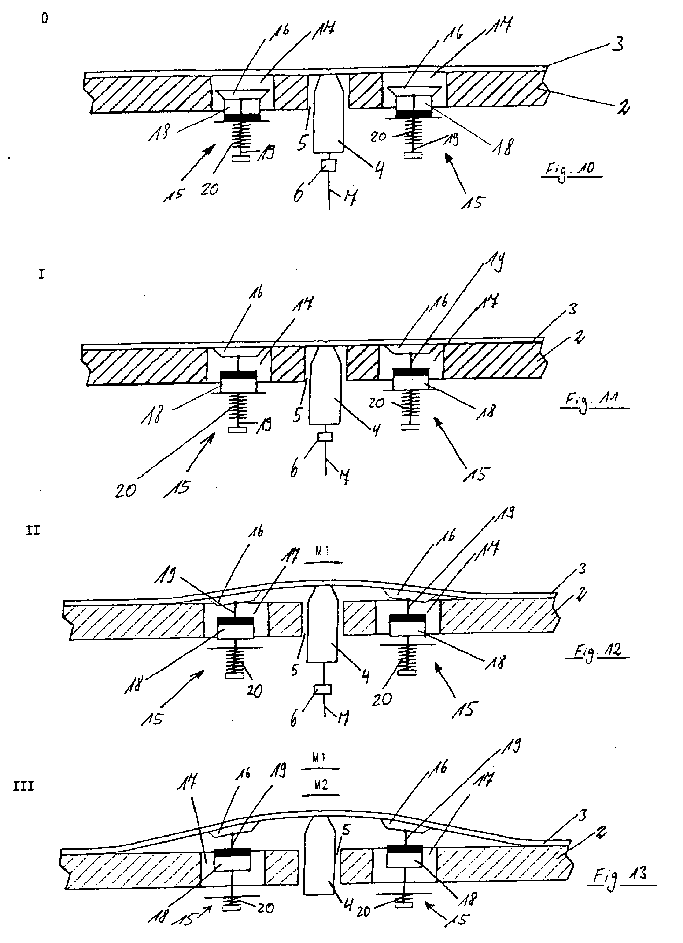

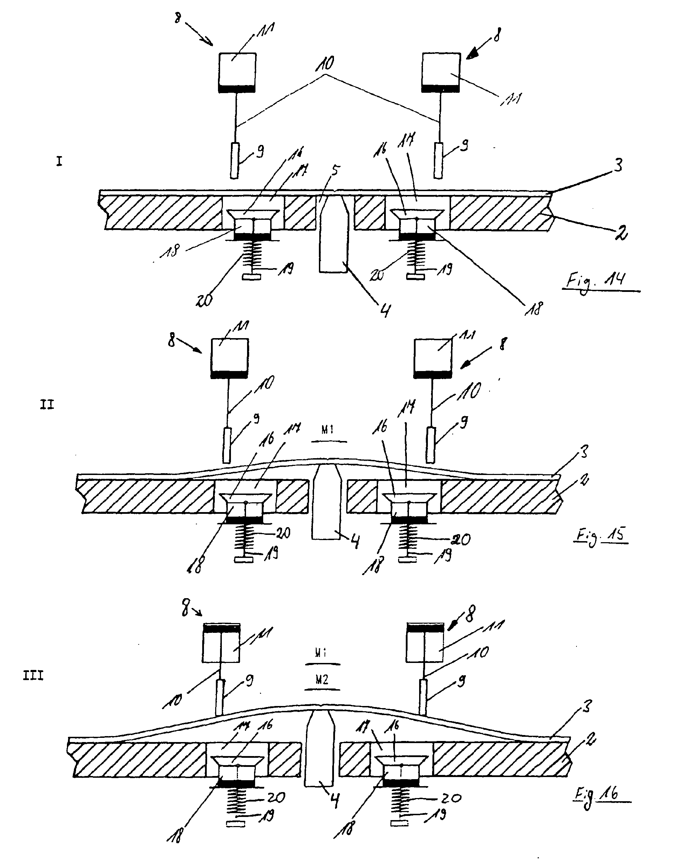

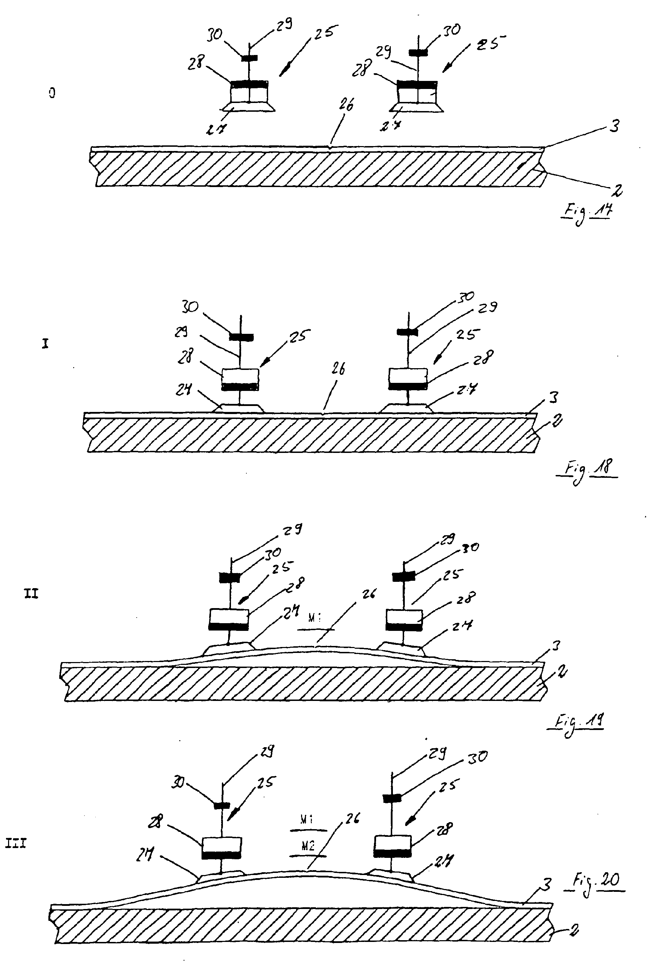

Die für das erfindungsgemäße Verfahren verwendbare Vorrichtung 1 (Fig. 1 bis 24) besitzt einen Bearbeitungstisch 2 zum Auflegen von Glasplatten oder Glastafeln 3.

Zum Wölben der Glastafel 3 ist beispielsweise eine sogenannte Brechleiste 4 vorhanden. Die Brechleiste 4 ist ein langgestreckter Körper in Form eines Balkens oder einer Leiste. Die Brechleiste 4 ist in einer schlitzförmigen Aussparung 5 im Bearbeitungstisch 2 angeordnet. Die Aussparung 5 erstreckt sich quer zur Längserstreckung des Bearbeitungstisches 2 und ist vorzugsweise kürzer als die Tischbreite aber länger als die Breite einer aufgelegten Glasplatte 3. Die Brechleiste 4 besitzt einen oder mehrere Antriebe 6, die über ein Gestänge 7, insbesondere eine Spindel 7 jeweils auf die Brechleiste 4 derart einwirken, dass die Brechleiste 4 nach oben aus dem Schlitz herausfahrbar und in diesen wieder hereinfahrbar ist.

Oberhalb des Bearbeitungstisches 2 sind beidseitig des Schlitzes 5 bzw. der Brechleiste 4 Niederhaltereinrichtungen 8 vorhanden. Die Niederhaltereinrichtungen 8 besitzen je eine Niederhalteleiste 9. Die Niederhalterleisten 9 sind langgestreckt ausgebildet und verlaufen parallel zur Aussparung 5, wobei sie eine Länge aufweisen, die in etwa der Länge der Brechleiste 4 entspricht. Die Niederhalterleisten 9 sind über ein Gestänge 10 o.ä. mit Rückstelleinrichtungen 11 derart verbunden, dass die Niederhalteleisten 9 aus einer unteren Ruhelage gegen die Kraft der Rückstelleinrichtungen 11 bis zum Erreichen von Endanschlägen anhebbar sind. Die Rückstelleinrichtungen 11 sind beispielsweise Federpakete oder Gasdruckfedern. Die Niederhaltereinrichtungen 9 lassen sich unter Verringerung ihres Abstandes aufeinander zu fahren und umgekehrt, wobei jede Niederhalterleiste 9 näher an die Brechleiste gefahren wird und umgekehrt.

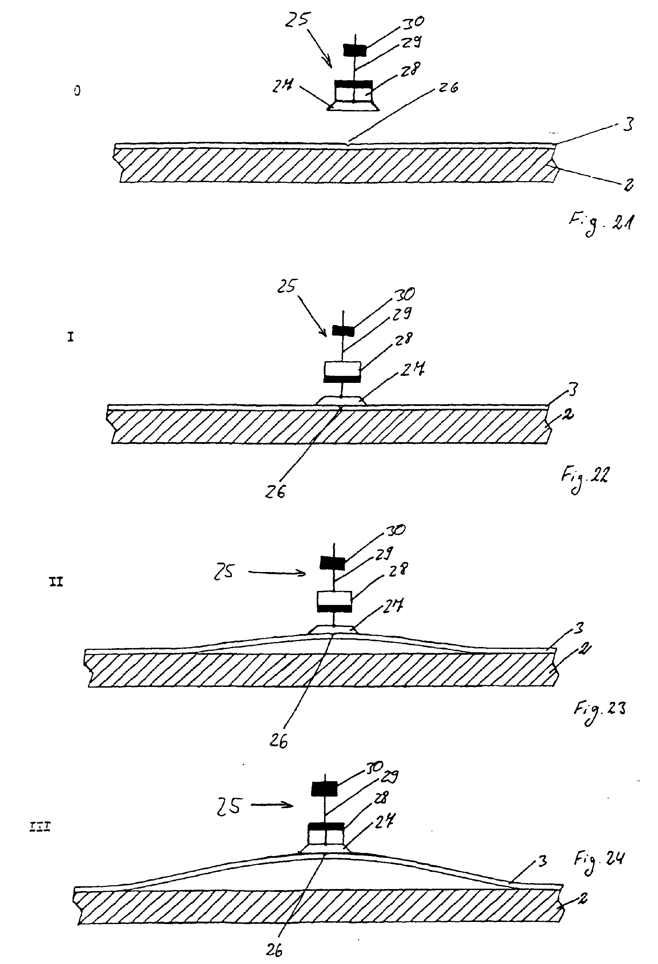

Bei einer weiteren vorteilhaften Ausführungsform (Fig. 10 bis 13) sind benachbart zur Aussparung 5 und entlang der Aussparung 5 Saugereinrichtungen 15 vorhanden. Die Saugereinrichtung 15 umfasst insbesondere runde Saugnäpfe 16, welche unterhalb einer auf den Tisch 2 aufzulegenden Glastafel 3 in insbesondere runden Aussparungen 17 angeordnet sind. Die Saugnäpfe 16 sind mittels Kolbenzylindereinheiten 18 an eine Glasplatte 13 heranfahrbar und von dieser weg fahrbar, wobei die Saugnäpfe 16 mit entsprechenden, insbesondere pneumatischen Einrichtungen (nicht gezeigt) sich an einer Glasplatte ansaugen können und das Ansaugen wieder lösen können.

Die Saugnäpfe 16 sind unmittelbar oder mittelbar über die Kolbenzylindereinheiten 18 über ein Gestänge 19 mit einer Rückstelleinrichtung 20 derart verbunden, dass sie gegen die Kraft der Rückstelleinrichtungen 20 aus dem Tisch 2 heraushebbar sind bis zu einem Endanschlag der Rückstelleinrichtungen 20. Die Rückstelleinrichtungen 20 können z.B. Federpakete oder Gasdruckfedern sein.

Ferner ist es auch möglich, sowohl Niederhaltereinrichtungen 8 als auch Saugeinrichtungen gleichzeitig vorzusehen (Fig. 14 bis 16), um sie alternativ oder gemeinsam zu verwenden.

Bei einer weiteren vorteilhaften Ausführungsform (Fig. 17 bis 20) erfolgt die Wölbung der Glasplatte 3 mittels Saughebeeinrichtungen 25. Die Saughebeeinrichtungen 25 sind beiderseits einer gewünschten Trennlinie bzw. Ritzlinie 26 einer Glastafel 3 angeordnet. Vorzugsweise befinden sich je parallel zur Ritzlinie 26 beiderseits je eine Reihe von voneinander beabstandeten Saughebeeinrichtungen 25. Jede Saughebeeinrichtung 25 umfasst einen Saugnapf 27, der mit einer Kolbenzylindereinheit 28 aus einer Ruheposition auf eine Glastafel 3 absenkbar bzw. von ihr abhebbar ausgebildet ist. Die Saugnäpfe 27 können insbesondere mit pneumatischen Einrichtungen (nicht gezeigt) aktiviert oder deaktiviert werden. Die Saugnäpfe 27 stehen unmittelbar oder mittelbar über die Kolbenzylindereinheiten 28 mit einem Gestänge 29, insbesondere einer Spindel 29 mit einem Antrieb 30 in Verbindung. Der Antrieb 30 kann die Saugnäpfe 27 und gegebenenfalls eine daran angesaugte Glasplatte 3 zum Wölben über die Spindel 29 nach oben bewegen bzw. absenken. Der Antrieb ist insbesondere ein elektromotorischer Servo-Antrieb.

Bei einer weiteren Ausführungsform ist lediglich eine Reihe von Saughebeeinrichtungen 25 vorhanden, welche mittig oberhalb entlang der Ritzlinie 26 angeordnet ist. Bei dieser Ausführungsform saugen die Saughebeeinrichtungen 25 die Glastafel 3 mittig zur Ritzlinie 26 an und heben diese anschließend hoch.

Im folgenden werden die Funktionsweisen der für das erfindungsgemäße Verfahren verwendbaren Vorrichtungen erläutert.

Bei den für das erfindungsgemäße Verfahren verwendbaren Vorrichtungen mit einer Brechleiste und Niederhaltern (Fig. 1 bis 6) wird eine Glasplatte 3 so auf dem Bearbeitungstisch 2 positioniert, dass die Ritzlinie 26 oberhalb der Brechleiste 4 angeordnet ist. Die Niederhaltereinrichtungen 8 befinden sich hierbei in einer Ruheposition. Anschließend wird die Brechleiste mittels der Spindeln 7 und der Antriebe 6 zur Ritzlinie 26 hin aus dem Bearbeitungstisch 2 herausgefahren, wodurch die Glasplatte 3 aufgewölbt wird. Beispielsweise wird eine erste Phase der Krafteinleitung so weit durchgeführt, bis die Wölbung die Niederhalterleisten 9 erreicht. Anschließend wird weiter aufgewölbt, wobei die sich aufwölbende Glasplatte 3 die Niederhaltereinrichtungen 8 bis in ihre Endanschläge anhebt (Fig. 3). In dem Moment, in dem die Niederhaltereinrichtungen 8 in ihren Endanschlägen sind, ist eine weitere Aufwölbung der Glasplatte nur noch zwischen den beidseitig der Ritzlinie 26 angeordneten Niederhaltereinrichtungen 8 möglich, da diese jede weitere Wölbung unterbinden. Hierdurch kommt es zu einer mehr oder weniger schlagartigen Momenterhöhung, welche zum endgültigen Bruch der Glasplatte führt. Die Brechleiste 4 kann hierbei über die gesamte Breite der Glastafel gleichmäßig angehoben werden (Fig. 5, 6). Sollte ein durch das Ritzen in die Glasplatte eingebrachter Riss jedoch von einer Seite der Glasplatte zur gegenüberliegenden Seite der Glasplatte bezüglich der Rissstiefe ab- bzw. zunehmen oder eine unterschiedliche Spannungsverteilung im Glas aus anderen Gründen notwendig sein, kann die Brechleiste 4 an einer Seite der Glastafel auch mehr angehoben werden als an der gegenüberliegenden Seite (Fig. 8). Hierdurch kann eine Spannungs- bzw. Biegemomenthomogenisierung über die Breite der Glastafel erfolgen. Zur Erzielung des endgültigen Bruchs der Glastafel kann die Brechleiste dann an dem zuvor abgesenkten Ende auch bis auf das höhere Niveau der zunächst angehobenen Seite der Brechleiste angehoben werden (Fig. 9). Der Bruch kann jedoch auch von einer Seite der Glastafel her erfolgen.

Bei einer Ausführungsform, bei der an Stelle der Niederhalter Saugereinrichtungen 15 vorhanden sind, werden zunächst die Saugereinrichtungen 15 mit den Saugnäpfen 16 von unten an die Glastafel herangefahren und die Glastafel von den Saugnäpfen 16 angesaugt. Anschließend wird die Brechleiste in bereits beschriebener Weise die Glastafel 3 aufwölbend aus dem Bearbeitungstisch 2 herausgefahren. Hierbei werden die Saugeinrichtungen gegen die Rückstelleinrichtungen 20 ebenfalls empor gehoben. Bei weiterem Anheben der Brechleiste 4 gelangen die Saugeinrichtungen 15 mit den Rückstelleinrichtungen 20 in ihre Endanschläge, wodurch ebenfalls die bereits beschriebene Erhöhung des Biegemoments herbeigeführt wird.

Bei einer Ausführungsform sowohl mit Niederhaltereinrichtungen 8 als auch Saugeinrichtungen 15 können sowohl die Niederhaltereinrichtungen 8 als auch die Saugeinrichtungen 15 oder beide auf die Glastafel einwirken.

Bei einer Ausführungsform, bei der die Glasplatte 3 mit Saughebeeinrichtungen 25 angehoben wird, werden zunächst die Saugnäpfe 27 auf die Oberseite der Glastafel abgesenkt und saugen sich dort am Glas fest. Anschließend wird die Glasplatte mittels der Antriebe 30 und über die Spindeln 29 derart angehoben, dass sie sich wölbt (Fig. 19).

Bei einer Ausführungsform mit Saugeinrichtungen über der Ritzlinie 26 (Fig. 21 bis 24) werden die Saugnäpfe im Bereich der Ritzlinie 26 auf die Glasplatte abgesenkt und saugen sich dort fest. Anschließend wird die Glasplatte über die Gestänge 29 bzw. Spindeln 29 und die Antriebe 30 sich wölbend angehoben (Fig. 23, 24), bis der Bruch der Platte eintritt.

Bei dem erfindungsgemäßen Verfahren ist von Vorteil, dass die Brechkante derart optimiert ist, dass sie ohne weiteres als Sichtkante bei Möbelglas, Glas für Kraftfahrzeuge oder bei Glas im Bau- oder Innenausbausektor verwendet werden kann, insbesondere ohne oder nur mit geringen Nacharbeitungen. Ferner werden Mikrorisse, die quer zum Hauptriss verlaufen, Schuppigkeit, Welligkeit oder Muscheligkeit des Risses vermieden.

**Patentansprüche**

1. Verfahren zum Trennen von Glas, wobei die Glasoberfläche im Bereich einer gewünschten Trennlinie zur Initiierung eines Risses angeritzt wird und anschließend eine Last derart in das Glas eingetragen wird, dass im Bereich der Ritzlinie der Bruch erfolgt, wobei die Last derart eingetragen wird, dass im Bereich der Ritzlinie eine langsame Rissausbreitung stattfindet, die zum Bruch führt, wobei oberhalb einer Lastschwelle ($F_S$), die 65 bis 85% der Bruchlast ($F_{krit}$) beträgt, eine gegenüber einer Laststeigerungsrate unterhalb der Lastschwelle ($F_S$) veränderte Laststeigerungsrate verwendet wird, wobei die Last bis zur Lastschwelle ($F_S$) mit einer Laststeigerungsrate eingetragen wird, die höher ist, als die Laststeigerungsrate oberhalb der Lastschwelle ($F_S$),

die eine langsame Rissausbreitung gewährleistet.

2. Verfahren nach Anspruch 1 ,
   **dadurch gekennzeichnet, dass**
   die Lastschwelle ($F_S$) 70 bis 80% der Bruchlast ($F_{krit}$) beträgt.

3. Verfahren nach Anspruch 1 oder 2,
   **dadurch gekennzeichnet, dass**
   die Laststeigerungsrate oberhalb der Lastschwelle ($F_S$) so gewählt ist, dass sie der allgemeinen Formel

$$T_d = T_{Fs} \left( 1 + \alpha \frac{d}{d_0} \right)$$

entspricht, wobei $T_d$ die Zeit vom Erreichen der Lastschwelle bis zum Bruch, d die Glasdicke, $d_0$ eine Referenzglasdicke, $T_{FS}$ die Zeit bis zum Erreichen der Lastschwelle und $\alpha$ ein Erschwernisfaktor ist.

4. Verfahren nach Anspruch 3,
   **dadurch gekennzeichnet, dass**
   die Referenzglasdicke $d_0$ zwischen 1 und 4 mm beträgt.

5. Verfahren nach Anspruch 3 und/oder 4,
   **dadurch gekennzeichnet, dass**
   in dem Erschwernisfaktor $\alpha$ den Glasbruch bestimmende äußere Einflüsse eingerechnet werden.

6. Verfahren nach Anspruch 5,
   **dadurch gekennzeichnet, dass**
   in dem Erschwernisfaktor $\alpha$ Größen enthalten sind, die sich aus dem Einfluss der Parameter

   - Glasdicke
   - Glasart
   - Schneidrädchenart

     - Schneidrädchenwinkel
     - Schneidrädchendurchmesser
     - Schneidrädchenschliff (glatt oder rau)

   - Schneidrädchenabnutzung
   - Schneidflüssigkeit
   - Schneiddruck
   - Schneidgeschwindigkeit
   - Massenverteilung links und rechts vom Schnitt.
   - Art und Weise des Lasteintragens (Wölben, Abkanten, etc.)

   auf dem Glasbruch bzw. dem Brechvorgang ergeben.

7. Verfahren nach einem der vorhergehenden Ansprüche,

**dadurch gekennzeichnet, dass**
der Übergang der Laststeigerungsrate bis zur Lastschwelle ($F_s$) zur Laststeigerungsrate oberhalb der Lastschwelle ($F_s$) abrupt oder fließend ist.

8. Verfahren nach einem der vorhergehenden Ansprüche,
**dadurch gekennzeichnet, dass**
die Laststeigerungsrate oberhalb der Lastschwelle ($F_s$) derart gewählt wird, dass sie an den Rissfortschritt und damit die sich verringernde effektive Glasdicke angepasst ist.

9. Verfahren nach einem der Ansprüche 1 bis 7 und/ oder nach Anspruch 8,
**dadurch gekennzeichnet, dass**
die Laststeigerungsrate über die Zeit verringert oder erhöht wird, so dass die Laststeigerungsrate einen insbesondere parabolischen oder hyperbolischen Verlauf annimmt.

10. Verfahren nach einem der vorhergehenden Ansprüche,
**dadurch gekennzeichnet, dass**
als Schneidflüssigkeit beim Anritzen des Glases eine Schneidflüssigkeit auf Wasserbasis verwendet wird.

11. Verfahren nach Anspruch 10,
**dadurch gekennzeichnet, dass**
eine wässrige Emulsion oder eine wässrige Suspension verwendet wird.

12. Verfahren nach einem der Ansprüche 5 oder 6,
**dadurch gekennzeichnet, dass**
die Parameter manuell oder automatisiert erfasst werden und die Einflussgrößen der Parameter als Daten für eine Maschinensteuerung abgelegt werden.

13. Verfahren nach einem der vorhergehenden Ansprüche,
**dadurch gekennzeichnet, dass**
die Laststeigerung während des Lasteintrages und oberhalb der Lastschwelle ($F_S$) für eine kurze Zeit ausgesetzt wird, wobei die von außen aufgebrachte Last konstant gehalten wird.

14. Verfahren nach einem der vorhergehenden Ansprüche,
**dadurch gekennzeichnet, dass**
die Last während des Lasteintrages oberhalb der Lastschwelle ($F_s$) für eine kurze Zeit abgesenkt wird.

15. Verfahren nach Anspruch 13 oder 14,
**dadurch gekennzeichnet, dass**
nach dem Konstanthalten und/oder Absenken der Last die Laststeigerung bis zum Bruch mit einer Laststeigerungsrate stattfindet, die eine weitere langsame Rissausbreitung gewährleistet.

**Claims**

1. Method for severing glass, the surface of the glass being scored in the region of a desired severing line to initiate a crack and a load subsequently being introduced into the glass such that the break occurs in the region of the scored line, the load being introduced in such a way that slow spreading of the crack that leads to the break takes place in the region of the scored line, a different rate of load increase being used above a load threshold ($F_S$), which is 65 to 85% of the breaking load ($F_{crit}$), than below the load threshold ($F_S$), the load being introduced up to the load threshold ($F_S$) at a rate of load increase that is higher than the rate of load increase above the load threshold ($F_S$), which ensures slow spreading of the crack.

2. Method according to Claim 1, **characterized in that** the load threshold ($F_S$) is 70 to 80% of the breaking load ($F_{crit}$).

3. Method according to Claim 1 or 2, **characterized in that** the rate of load increase above the load threshold ($F_S$) is chosen such that it satisfies the general formula

$$T_d = T_{Fs}\left(1 + \alpha\,\frac{d}{d_0} - - \right),$$

where $T_d$ is the time from reaching the load threshold to when breaking occurs, d is the thickness of the glass, $d_0$ is a reference glass thickness, $T_{FS}$ is the time it takes to reach the load threshold and $\alpha$ is a difficulty factor.

4. Method according to Claim 3, **characterized in that** the reference glass thickness $d_0$ is between 1 and 4 mm.

5. Method according to Claim 3 and/or 4, **characterized in that** external influences determining the breaking of the glass are incorporated in the difficulty factor $\alpha$.

6. Method according to Claim 5, **characterized in that** the difficulty factor $\alpha$ includes variables resulting from the influence of the parameters

 - thickness of the glass
 - type of glass
 - type of cutting wheel

- cutting wheel angle
- cutting wheel diameter
- cutting wheel finish (smooth or rough)

- cutting wheel wear
- cutting fluid
- cutting pressure
- cutting speed
- distribution of material to the left and right of the cut
- manner of load introduction (curved bending, edge bending, etc.).

on the breaking of the glass or the breaking process.

7. Method according to one of the preceding claims, **characterized in that** the transition of the rate of load increase up to the load threshold ($F_S$) to the rate of load increase above the load threshold ($F_S$) is abrupt or smooth.

8. Method according to one of the preceding claims, **characterized in that** the rate of load increase above the load threshold ($F_S$) is chosen in such a way that it is adapted to the progression of the crack and consequently to the reducing effective thickness of the glass.

9. Method according to one of Claims 1 to 7 and/or according to Claim 8, **characterized in that** the rate of load increase is reduced or raised over time, so that the rate of load increase assumes a progression that is in particular parabolic or hyperbolic.

10. Method according to one of the preceding claims, **characterized in that** a water-based cutting fluid is used as the cutting fluid when scoring the glass.

11. Method according to Claim 10, **characterized in that** an aqueous emulsion or an aqueous suspension is used.

12. Method according to either of Claims 5 and 6, **characterized in that** the parameters are recorded in a manual or automated manner and the influencing variables of the parameters are stored as data for a machine control.

13. Method according to one of the preceding claims, **characterized in that** the load increase is suspended for a short time during the introduction of load above the load threshold ($F_S$), the externally applied load being kept constant.

14. Method according to one of the preceding claims, **characterized in that** the load is lowered for a short time during the introduction of load above the load threshold ($F_S$).

15. Method according to Claim 13 or 14, **characterized in that**, after keeping the load constant and/or lowering the load, the load increase up to breaking takes place at a rate of load increase that ensures further slow spreading of the crack.

**Revendications**

1. Procédé pour sectionner du verre, dans lequel la surface du verre est éraflée dans la région d'une ligne de sectionnement souhaitée pour amorcer une fissure, puis une charge est introduite dans le verre de telle sorte que la rupture ait lieu dans la région de la ligne d'éraflure, la charge étant appliquée de telle sorte qu'il se produise un élargissement lent de la fissure dans la région de la ligne d'éraflure, lequel conduit à la rupture, un taux d'augmentation de charge modifié par rapport à un taux d'augmentation de charge en dessous d'un seuil de charge ($F_s$) valant de 65 à 85% de la charge de rupture ($F_{krit}$), étant utilisé au-dessus dudit seuil de charge ($F_s$), la charge étant appliquée jusqu'au seuil de charge ($F_s$) avec un taux d'augmentation de charge qui est supérieur au taux d'augmentation de charge au-dessus du seuil de charge ($F_s$) qui garantit un élargissement lent de la fissure.

2. Procédé selon la revendication 1, **caractérisé en ce que** le seuil de charge ($F_s$) vaut 70 à 80% de la charge de rupture ($F_{krit}$).

3. Procédé selon la revendication 1 ou 2, **caractérisé en ce que** le taux d'augmentation de charge au-dessus du seuil de charge ($F_s$) est choisi de telle sorte qu'il satisfasse à la formule suivante :

$$T_d = T_{Fs}\left(1 + \alpha \frac{d}{d_0}\right) ,$$

$T_d$ étant la durée entre l'obtention du seuil de charge et la rupture, d étant l'épaisseur du verre, $d_0$ étant une épaisseur de verre de référence, $T_{FS}$ étant la durée jusqu'à l'obtention du seuil de charge et $\alpha$ étant un facteur d'aggravation.

4. Procédé selon la revendication 3, **caractérisé en ce que** l'épaisseur de verre de référence $d_0$ est comprise entre 1 et 4 mm.

5. Procédé selon la revendication 3, **caractérisé en ce que** dans le facteur d'aggravation $\alpha$, on inclut des influen-

ces extérieures déterminant la rupture du verre.

6. Procédé selon la revendication 5,
   **caractérisé en ce que**
   dans le facteur d'aggravation α sont incluses des valeurs qui résultent de l'influence des paramètres suivants sur la rupture du verre ou l'opération de rupture :

   - épaisseur du verre
   - type de verre
   - type des molettes de coupe

     - angle des molettes de coupe
     - diamètre des molettes de coupe
     - tranchant des molettes de coupe (lisse ou rugueux)

   - usure des molettes de coupe
   - liquide de coupe
   - pression de coupe
   - vitesse de coupe
   - répartition massique à gauche et à droite de la coupe
   - type d'application de charge (courbure, repliage, etc.).

7. Procédé selon l'une quelconque des revendications précédentes,
   **caractérisé en ce que**
   la transition du taux d'augmentation de charge jusqu'au seuil de charge ($F_s$) au taux d'augmentation de charge au-dessus du seuil de charge ($F_s$) est brutale ou douce.

8. Procédé selon l'une quelconque des revendications précédentes, **caractérisé en ce que** le taux d'augmentation de charge au-dessus du seuil de charge ($F_s$) est choisi de telle sorte qu'il soit adapté à la progression de la fissure et donc à l'épaisseur du verre effective se réduisant.

9. Procédé selon l'une quelconque des revendications 1 à 7 et/ou selon la revendication 8,
   **caractérisé en ce que**
   le taux d'augmentation de charge est réduit ou augmenté dans le temps, de telle sorte que le taux d'augmentation de charge ait une allure notamment parabolique ou hyperbolique.

10. Procédé selon l'une quelconque des revendications précédentes,
    **caractérisé en ce que**
    l'on utilise comme liquide de coupe lors de l'éraflure du verre un liquide de coupe à base d'eau.

11. Procédé selon la revendication 10,
    **caractérisé en ce que**

l'on utilise une émulsion aqueuse ou une suspension aqueuse.

12. Procédé selon l'une quelconque des revendications 5 ou 6,
    **caractérisé en ce que**
    les paramètres sont détectés manuellement ou automatiquement et les valeurs d'influence des paramètres sont enregistrées sous forme de données pour une commande par machine.

13. Procédé selon l'une quelconque des revendications précédentes,
    **caractérisé en ce que**
    l'augmentation de charge pendant l'application de la charge et au-dessus du seuil de charge ($F_s$) est arrêtée pendant un court instant, tandis que la charge appliquée de l'extérieur est maintenue constante.

14. Procédé selon l'une quelconque des revendications précédentes,
    **caractérisé en ce que**
    la charge pendant l'application de charge au-dessus du seuil de charge ($F_s$) est baissée pendant un court instant.

15. Procédé selon la revendication 13 ou 14,
    **caractérisé en ce**
    **qu'**après le maintien constant et/ou l'abaissement de la charge, l'augmentation de charge jusqu'à la rupture a lieu à un taux d'augmentation de charge qui garantit un autre élargissement lent de la fissure.

Fig. 1

Fig. 2

Fig. 3

EP 1 334 953 B1

Fig. 4

Fig. 5

Fig. 6

Fig. 7

Fig. 8

Fig. 9

Fig. 10

Fig. 11

Fig. 12

Fig. 13

I

*Fig. 14*

II

*Fig. 15*

III

*Fig. 16*

Fig. 17

Fig. 18

Fig. 19

Fig. 20

Fig. 21

Fig. 22

Fig. 23

Fig. 24

Fig. 25a

Fig. 25e

Fig. 25b

Fig. 25f

Fig. 25c

Fig. 25g

Fig. 25d

Fig. 25h

Fig. 25i

Fig. 25j

Fig. 25k

Fig. 25l

Fig. 25m

Fig. 25m

Fig. 25o

Fig. 25p